# EUROPEAN PATENT APPLICATION

(11) **EP 1 351 146 A1**
(43) Date of publication of application: **08.10.2003**
(21) Application number: 02354057.8
(22) Date of filing: 04.04.2002
(51) Int. Cl.: G06F 11/14

(54) **Power management system and method with recovery after power failure**

(71) Applicant: Hewlett-Packard Company, Palo Alto, CA 94304 (US)
(72) Inventor: Neuman, Paul, 38640 Claix (FR); Stephan, Yann, 38130 Echirolles (FR)
(74) Representative: Lloyd, Richard Graham

(57) **Abstract**

The present invention relates to a power management system and method for a computer system. The current ACPI specification defines data that should be saved to a non-volatile storage medium to recover from a sleeping state. However, the ACPI specification does not support restoration of the system context following a power failure during a sleeping state. The RAM image includes all applications and data that are currently resident in RAM together with device register values that may be lost during a reduced power consumption state of the computer system. It will be appreciated that it takes a significant amount of time to collate and save the data required to maintain the system context of the client machine. Suitably, the present invention provides for saving, to a non-volatile storage medium, data representing only a portion of the system memory context. Saving the only the useful portions of the system memory context results in fewer bytes needing to be saved to the non-volatile storage medium. This, in turn, saves power since the non-volatile storage medium is operable for a shorter period of time. There are fewer read/write operations and preferably fewer disk-head movements in the case of an HDD.

## Description

### Field of the Invention

The present invention relates to a power management system and method, and, more particularly, to power management of computing systems.

### Background to the invention

The computing industry has developed a common interface for enabling robust operating system directed motherboard system configuration and power management (OSPM) of entire computer systems. The common interface definition and functionality manifests itself in the Advanced Configuration and Power Interface (ACPI) specification. The current version of the ACPI is version 2, having a release date of July 27, 2000, together with the ACPI Errata version 1.3, November 27, 2000, both of which are incorporated herein by reference for all purposes.

The ACPI specification defines a number of operating states for computer systems, such as, for example, desktop, mobile, workstation and server computers and laptop computers. Currently, the ACPI specification defines a number of states which include states S0, S1, S2, S3 and S4. Each of the five states represents a different state or degree of power consumption of the associated computer system. State S0 represents the conventional operating state or working state in which the computer system is fully functional and is not in a power saving mode. The remaining states represent the system sleeping states in which the computer system has undertaken steps to reduce power consumption.

Of particular interest are the S3 and S4 states. The ACPI specification defines the behaviour of the S3 state such that less power is consumed within the S3 state as compared to the S2 state. The processor does not execute instructions and the processor context is not maintained. The dynamic RAM context is maintained and power resources are held in a state that is compatible with the S3 state. Devices associated with the computer system are operable such that they are compatible with the S3 state, that is, only devices that solely reference power resources are in the ON state (all other devices are in the off or D3 state). Devices that are enabled to wake the system, and that can do so from their current state, can initiate a hardware event that causes the system to transition to the working state, S0.

The ACPI specification defines the system behaviour in the S4 state as follows. The S4 state is logically lower than the S3 state and is arranged to consume less power than the S3 state. The processor is not executing instructions and the processor context is not maintained. RAM context is not maintained and power resources are in a state that is compatible with the S4 state, that is, all power resources that supply system level power in the S0, S1, S2 or S3 states are in the OFF state. All devices are operable so as to be compatible with the current power resources states; that is, all devices are in the D3 state when the system is in the S4 state.

A system, upon entering the S3 state or in preparation for entering the S3 state, saves, for example, the data necessary for resumption of the normal working state, S0, to RAM. Therefore, it can be appreciated that upon wake-up from the state S3, the system context saved to RAM can be accessed and restored relative quickly. Hence, the S3 sleeping state is known as a low wake-up latency sleep state. However, the S3 state suffers from a major inadequacy in the event of a power failure that adversely affects the RAM such that the content of the RAM is lost. Such a power failure prevents a reliable transition to the working system state, S0, and a re-boot of the computer system may be necessary. It can be appreciated that the data of applications and system context will be lost under such circumstances. Furthermore, a relatively long period of time will elapse during the re-boot before the computer system reaches the working state, S0.

In contrast, the OSPM of the system, before entering the S4 state, saves a significant amount of data to a non-volatile storage medium such as, for example, an HDD. Conventionally, data comprising the entire content of the RAM together with device register values are saved to a file, which is stored on the HDD. This data is known as the system memory context.

Upon wake-up from the S4 state, the OSPM of the system is responsible for restoring the system context. Therefore, a system transition from the S4 state to the S0 state involves a significant amount of data recovery. The content of a file, "HIBERFIL.SYS", containing the system memory context data, is retrieved from the HDD and loaded into RAM and is used to restore the system context as it was at the time of entering the state S4. Due to the need to access a relatively slow storage device, system context restoration is a relatively lengthy process in this state. Therefore, the S4 state is considered to be the longest wake-latency sleeping state. Since a non-volatile storage medium is used to store the recovery data, the system state S4 will allow recovery from a power failure. However, the time taken to effect such a recovery is unacceptably long.

Still further, since the RAM can, in some systems, be as large as 128MB or greater, it will be appreciated that a significant amount of time will be taken to save the RAM image, that is, the system memory context, to the HDD. Furthermore, as the resident RAM of a machine increases, the amount of power required to save that RAM image to the HDD or to read the RAM image from the HDD also increases. If the file containing the RAM image is fragmented, this will lead to further delays in reading the file from or writing the file to the HDD. Furthermore, the number of disk head seek movements is relatively high when accessing a fragmented file.

The current ACPI standards are arranged to ensure that the system context of a client machine is maintained during the sleep modes of operation. Within the hibernate mode, it can be appreciated that a significant amount of information is saved to non-volatile storage in the form of a RAM image. It will be appreciated that saving such a large amount of information is a timing-consuming task and may adversely affect the user's perception of the performance of the machine if it is performed frequently.

Still further, often operating systems upon terminating an application do not perform housekeeping tasks immediately, if at all. Therefore, the RAM may, at any given time, contain data that is not longer valid. This garbage data is no use to either the client machine or the user. Saving a RAM image to an HDD that includes such garbage data is a waste of processing resources.

Furthermore, reading from RAM is significantly faster than reading from ROM. Therefore, upon initialisation of a client machine, the ROM is copied into, or shadowed by, the RAM. The content of the shadow RAM or ROM will always be recoverable in the event of a crash, power outage or other disruption. Again, it can be appreciated that saving this portion of the RAM image would appear to serve no purpose.

It is an object of the present invention at least to mitigate some of the problems of the prior art.

### Summary of the Invention

Accordingly, a first aspect of the present invention provides a method for power management of a system, having a system context, comprising a first storage medium, having a current system memory context, which includes data relating to the system context, and a second non-volatile storage medium; the first and second storage media having first and second data access times respectively such that the first data access time is less than the second data access time; the system being operable in a plurality of states, each state having an associated level of system power consumption; the method comprising the steps of: outputting data representing only a portion of the current system memory context for storage on the second storage medium to allow a transition to a first state of the plurality of states from a second state of the plurality of states; and placing the system in the second state; restoring the system context from the current system memory context stored within the first storage medium in response to detection of an event while the system is in the second state or, in the event that insufficient power was available to the system to maintain the second state, retrieving the data representing the portion of the current system memory context from the second storage medium; and restoring the system memory context using the retrieved data.

Advantageously, embodiments of the present invention enable a power management system to be realised in which the amount of data that needs to be saved to preserve a system context is reduced.

Preferred embodiments are arranged to restore the system context using the newly restored system memory context following a power failure.

Furthermore, embodiments allow, in the absence of a power failure, a relatively fast wake-up time from a sleep state.

A second aspect of the present invention provides a system, capable of having a system context, comprising a first storage medium, having a current system memory context, and a second, non-volatile, storage medium; the first and second storage media having first and second data access times respectively such that the first data access time is less than the second data access time; the system being operable in a plurality of states, each state having an associated level of power consumption; the system further comprising: means for outputting data representing only a portion of the current system context for storage on the second storage medium to allow a transition to a first state of the plurality of states from a second state of the plurality of states, and means for placing the system in the second state; means for restoring the system context from the current system memory context stored within the first storage medium in response to detection of an event while the system is in the second state or, in the event that insufficient power was available to maintain the second state, retrieving the data representing the portion of the current system memory context from the second storage medium; and means for restoring the system memory context using the retrieved data.

Preferably, the first state is a working state in which the power consumption of the system is greater than that of the second state.

### Brief Description of the Drawings

Embodiments of the present invention will now be described, by way of example only, with reference to the accompanying drawings in which:
figure 1 shows schematically a power management environment according to an embodiment;
figure 2 shows a system memory map and usage table according to an embodiment;
figure 3 illustrates schematically ACPI states and state transitions for a known power management system;
figure 4 depicts states and associated state transitions of a power management system according to a first embodiment;
figure 5 shows a flowchart of a power-off or sleep process according to an embodiment;
figure 6 shows an embodiment of parallel compression and storage of the data representing a portion of the system memory context; and
figure 7 depicts a flowchart of a recovery process to restore the system memory context following a power failure during a reduced power consumption state according to an embodiment.

### Description of the Preferred Embodiments

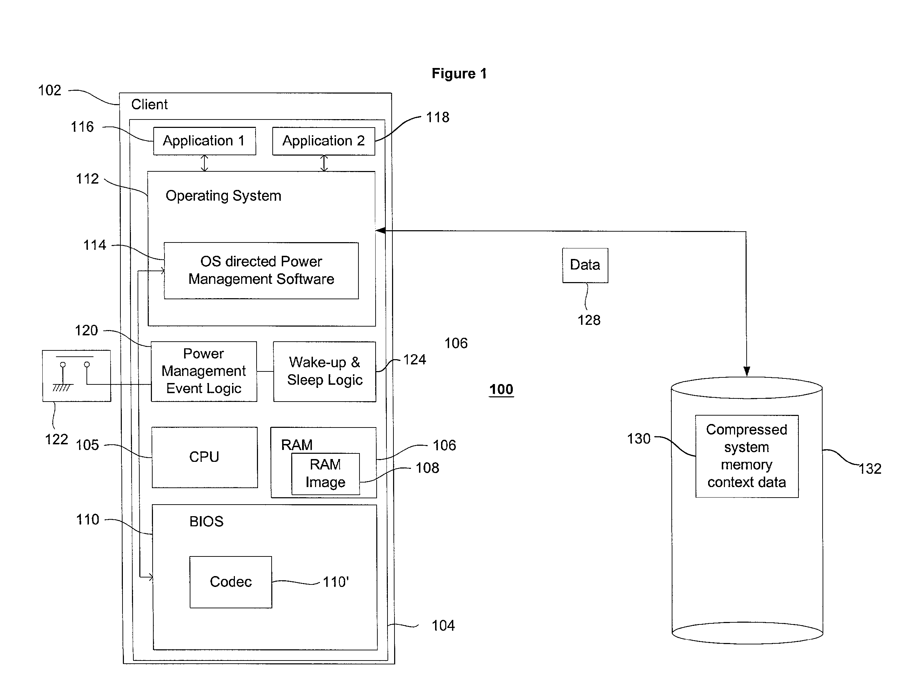

Figure 1 illustrates schematically a power management environment 100 within which ACPI specification power management can be realised. The power management environment 100 comprises a client machine 102, having a system context 104, a processor 105 and RAM 106 having a RAM image 108. The RAM image 108 comprises the content of the RAM 106. In preparation for entering a reduced power consumption state, in which some or all of the devices (not shown) of the client machine may be powered-down or placed in a reduced power consumption state, the RAM image also contains device register values (not shown) that are copied from the devices of the client machine 102. The device register values that are saved to RAM 106 are those values that would be lost in a reduced power consumption state. The RAM image 108, together with the device register values, are known as the system memory context.

The client machine has a boot-time routine 110 that supports ACPI routines. For example, the client machine may have an ACPI compliant BIOS. The client machine has an operating system 112, which is arranged to implement operating system directed power management (OSPM) using OSPM software 114. The client machine may run various applications 116 and 118. Preferably, the boot-time routine comprises a codec 110' for compressing and decompressing data. However, the codec may be realised in the form of a software codec, a hardware codec, which may form part of the CPU or which may be a dedicated DSP, or a combination of both hardware and software.

Additional hardware and software functionality is provided in the form of power management event detection logic 120, which detects events in response to which the current power state of the client machine may change to another state. For example, the user may depress an ON button 122, in which case the client machine may effect a transition from a current sleeping state to a working state. Alternatively, the user may instigate a software shutdown of the client machine 102 in response to which the OSPM software 114 may effect a transition from the current state to a sleeping state.

The events that the power management event detection logic 120 may detect also include, for example, modem or other communication device related events, which signal to the power management event detection logic 120 that data is being received and the modem or communication device and the RAM should be suitably powered-up to allow reception of the data. The power management event detection logic 120 forwards notification of detected events to the wake-up and sleep logic 124. The wake-up and sleep logic 124, in conjunction with the OSPM software 114, manages the system context of the client machine 102.

Rather than saving the whole of the system memory context to the non-volatile storage, only selected portions of the system memory context are saved to the non-volatile storage.

Preferably, the data representing the portion of the system memory context is compressed using the codec 110'. The compressed data 130 is output for storage on a non-volatile storage medium 132 such as, for example, an HDD. The compressed data 130 can be retrieved in response to a request from the client machine 102. Once the requested data has been received from the HDD 132, the data is decompressed using the codec 110'. The OSPM software 114 uses the decompressed system memory context data to restore or establish the system memory context from which the system context can be restored. In preferred embodiments, the compressed data 130 may be a concatenation of a number of blocks of the data 128, each of which represent a compressed fraction of the data representing the useful portion of system memory context. Alternatively, the data 130 may represent the whole of the portion of the system memory context compressed as a single block.

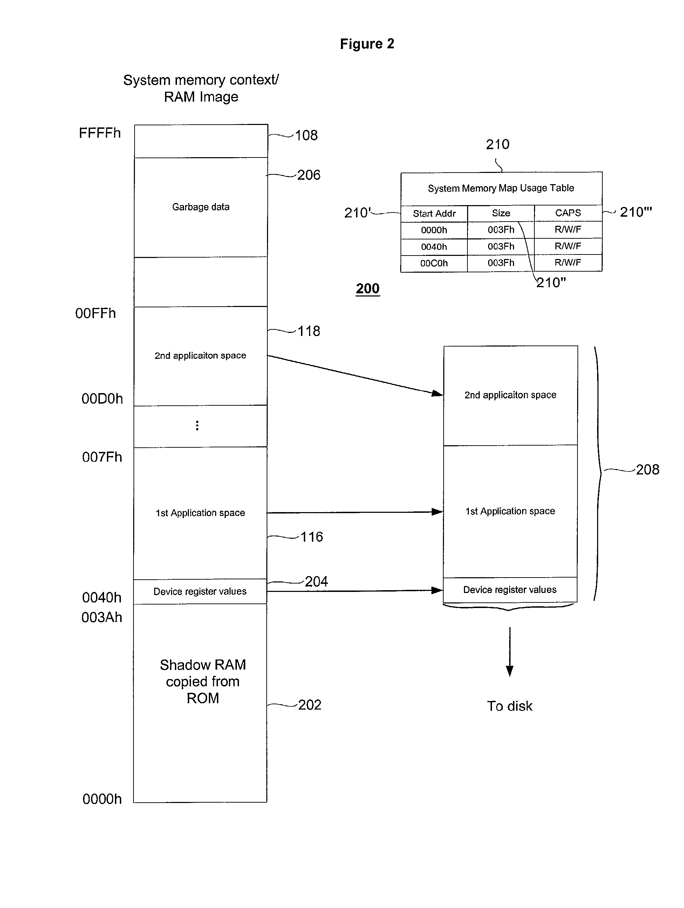

Figure 2 shows a schematic memory map 200 of the client machine 102. The memory map 200 illustrates the use of the RAM 106. The memory map 200 comprises a portion of shadow RAM 202, which is a copy of the system ROM. The memory map may also contain the first and second resident applications 116 and 118 respectively together with their data. Often applications, which have been terminated remain within the RAM 106. This has been represented in figure 2 as so-called garbage data 206. As mentioned above, in preparation for entering a reduced power consumption state, device register values 204 are stored within the RAM 106.

The embodiments of the present invention select only the useful portions of the RAM image for storage on the HDD 132. It can be appreciated that a portion 208 of the memory has been selected for storage on the HDD. The portion 208 comprises several sections of the system memory context that contain data which would be, as a minimum, necessary for restoring the system memory context, and, ultimately, the system context 104. However, that portion 208 may also contain data that is desirable for restoring the system memory context, and, ultimately, the system context 104. It can be appreciated that the illustrated portion comprises data representing the two applications 116 and 118 in addition to the device register values 204. This portion 208 of the system memory context will be output for storage on the HDD 132, either in its native form or, preferably, in its compressed form.

It will be appreciated that the amount data 208 intended to be saved to the HDD 132 is smaller than the amount of data representing the complete system memory context. It will take less space to store this data on the HDD. It will also take a significantly less period of time to storage this data or to transfer it over a network in the case where the data is stored remotely.

Figure 2 also illustrates a system memory map usage table or RAM map table 210, which provides a dynamic indication of the usage of the system memory. In preferred embodiments, the usage indicates which 64k blocks of memory are in use, that is, which 64k blocks contain information (data and applications) that should be saved as being part of the system memory context in the event of entry into a reduced power consumption state. It can be appreciated from the table 210 that the shadow RAM resides at 0000h to 003Ah, memory addresses 0040h to 007Fh are used to store the device register values 204 and the first application 116 and the second application are resident between addresses of 00C0h and 00FFh. The table 210 illustrated has a format of "start address" 210', "size" 210" and "CAPS" 210"'. A start address 210' defines the beginning of a block of RAM 106 that has been allocated. The "size" 210" field defines the size of the contiguous memory that has been allocated and the "CAPS" 210"' field determines the status of a corresponding block of memory. The status can be either "read", R, "write", W, or "flush", F. All blocks that have a status of "read" or "write" are dumped to HDD as part of the compressed system memory context data in preparation for entering a reduced power state. In contrast, all blocks marked "flush" are not dumped to the HDD as part of the compressed system memory context data in preparation for entering a reduced power state.

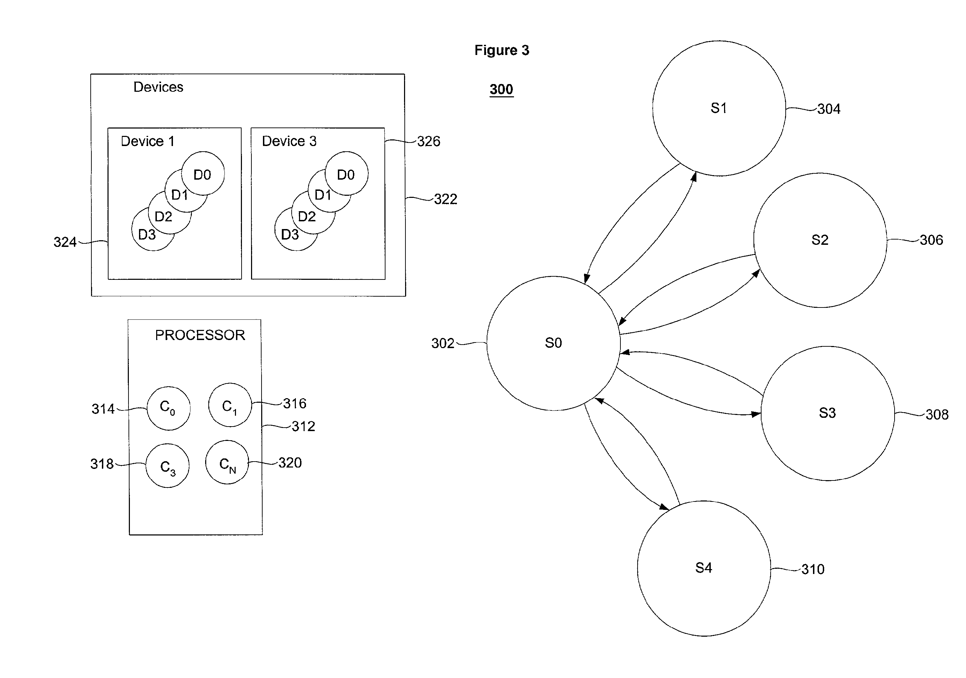

Referring to figure 3, there is shown a state diagram 300 of known power management states. The state diagram has five states, that is, states S0 302, S1 304, S2 306, S3 308 and S4 310. The five states are briefly described below.

State S0: While a client machine is in state S0, the client machine 102 is said to be in a working state. The behaviour of that state is defined such that a processor 312, or, in a multi-processor system, the processors are, in one of a number of so-called processor states, C₀ 314, C₁ 316, C₂ 318,..., C_{N} 320, which each represent varying degrees of processor operation and associated power consumption. The processor maintains the dynamic RAM context. The operating system software 112 individually manages any devices 322, such as first 324 and second 326 devices, connected to, or forming part of, the client machine 102. The devices can be in any one of four possible device states D0-D3, which, again, reflect varying degrees of power consumption. Any associated power resources are arranged to be in a state that is compatible with the device states.

State S1: The S1 state 304 is a low wake-up latency sleeping state. In this state, no system context is lost (CPU or chipset) and the client machine system hardware maintains all system context.

State S2: The S2 state 306 is also considered to be a low wake-up latency sleeping state. The S2 state 306 is substantially similar to the S1 state 304 but for the CPU and the system cache context being lost in the S2 state, since, typically, the operating system is responsible for maintaining cache and processor context.

State S3: The S3 state 308 is a low wake-up latency sleeping state where all system context is lost but for system memory. The CPU, cache and chip set context are lost in this state. However, the system hardware maintains memory context and restores some CPU and L2 configuration context. The S3 state 308 was described in detail above.

State S4: The S4 state 310 is the lowest power, longest wake-up latency sleeping state supported by ACPI. To reduce power consumption, preferably to a minimum, it is assumed that the hardware platform has powered-off all devices but platform context is maintained. The S4 state 310 has been described in detail above.

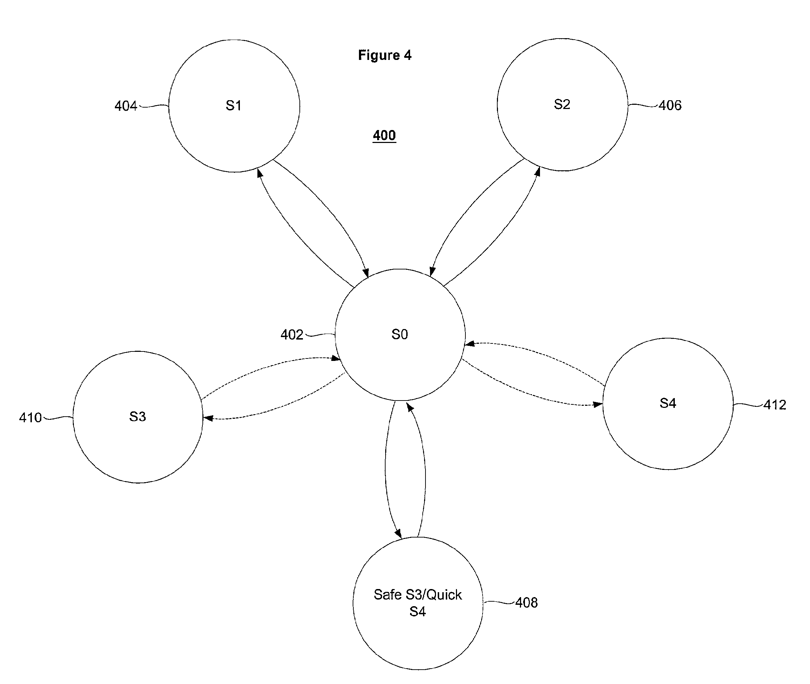

Figure 4 shows a state transition diagram 400 for a power management system according to an embodiment. It can be seen that the state transition diagram 400 comprises a working system state S0 402. Preferably, the conventional states S1 404 and S2 406 are also supported. The states S0-S2 of embodiments are substantially identical in operation and realisation to the corresponding states described above in relation to figure 3 and defined in current ACPI specifications.

Additionally, the state diagram 400 illustrates a new state, that is, a Safe S3/Quick S4 state 408 (SS3/QS4). The behaviour of the client machine 102 in the SS3/QS4 can be characterised by the actions of saving to the non-volatile storage medium 132, preferably in compressed form, only a portion of the same data that is saved in the conventional S4 state while concurrently maintaining in memory the same data as that maintained in the conventional S3 state. Furthermore, in the SS3/QS4 state 408 only the RAM remains in a powered state while all other aspects of the system adopt substantially the same powered state of the conventional S3 state but for the power management event detection logic 120 to allow a wake-up from that state. The compressed data is saved in a file that may be called "SYS_CONTEXT.SYS" or in a dedicated, reserved, storage area of the HDD 132. Alternatively, embodiments may provide a dedicated disk partition (not shown) for storage of the data representing the portion of the system memory context. Preferably, such a dedicated partition would not be accessible by the user.

Therefore, if a power failure occurs while the client machine is in the SS3/QS4 state, loading and decompressing the SYS_CONTEXT.SYS file can restore the system memory context, from which the system context 104 can be restored. In contrast to the known power management state S3, if a power failure occurs, the system context at the time of power failure is recoverable.

Compressing the data representing the portion of the system memory context also bears the additional benefit that the time taken to retrieve the SYS_CONTEXT.SYS file from the HDD 132 is reduced since the file contains fewer bytes than the system memory context from which it was derived. Having a smaller file to retrieve from the HDD will also result in reduced power consumption when reading the data from the HDD as compared to reading an uncompressed file containing the data representing the portion of the system memory context.

In preferred embodiments, the SYS_CONTEXT.SYS file is arranged to be stored on the HDD 132 in an unfragmented form. When the file is stored in an unfragmented form, the number of disk head seek operations will be reduced as compared to writing or reading a fragmented SYS_CONTEXT.SYS file. This leads to further power saving during the read and write operations. Furthermore, the storage and retrieval of such an unfragmented file will be quicker than the storage and retrieval of a fragmented file containing the data representing the portion of the system memory context. This may advantageously reduce the so-called "time to application" constraint that may be imposed by operating system vendors. The "time to application" is the time taken between a user instigating a boot of the client machine or recovery from a sleep state and the operating system having been loaded so that the user can instigate the loading and execution of an application.

It will be appreciated that the embodiments of the present invention are not limited to any particular type of compression. Embodiments can be realised in which any form of loss-less compression can be used to reduce the amount of data that needs to be stored to support system context restoration.

It will be appreciated that saving the data to a remotely accessible HDD may be desirable in the case of, for example, a thin client, which uses remotely accessible non-volatile storage. Therefore, the reduced data size resulting from a judicious selection of the necessary or useful portions of the system memory context allows the time taken to write the file to and to read the file from the HDD to be reduced. Therefore, the time taken to recover from a power failure when using network drives is reduced as compared to using a SYS_CONTEXT.SYS file that contains the complete system memory context. Still further, the reduced file size will also reduce network traffic when writing the SYS_CONTEXT.SYS file or retrieving the SYS_CONTEXT.SYS file.

It will be appreciated that the action of compressing the data representing the portion of the system memory context prior to saving the compressed data to the SYS_CONTEXT.SYS file allows the number of bytes to be written to an HDD to be reduced. This reduction in the number of bytes to be written to a file brings with it a corresponding power saving in operating the HDD. The power saving follows from the number of write operations being reduced.

In the absence of a power failure, the system context, when waking from the SS3/QS4 state, can be restored within a relatively short period of time. The relatively short period of time may be, for example, 5 seconds, that is, within a time scale that is comparable to the wake-up time for a conventional S3 state. However, the embodiments provide the additional security of the system context also being recoverable after a power failure, unlike the conventional S3 state.

Preferably, once the system memory context or system context has been restored following a power failure, the system enters or resumes the SS3/QS4 state. However, it will be appreciated that embodiments can be realised such that any one of the states could be entered upon recovery.

Although the above embodiments show a lack of support for S3 and S4 states, it will be appreciated that embodiments can be realised in which the S3 and S4 states are supported in addition to the states described. The states S3 410 and S4 412 are shown in figure 4 as being optionally supported. Furthermore, embodiments can be realised which have only three states, which are the working state, S0, the SS3/QS4 state and a mechanical off or maintenance state. Alternatively, embodiments can be realised which have only two states; namely, the working state, S0, and the SS3/QS4 state.

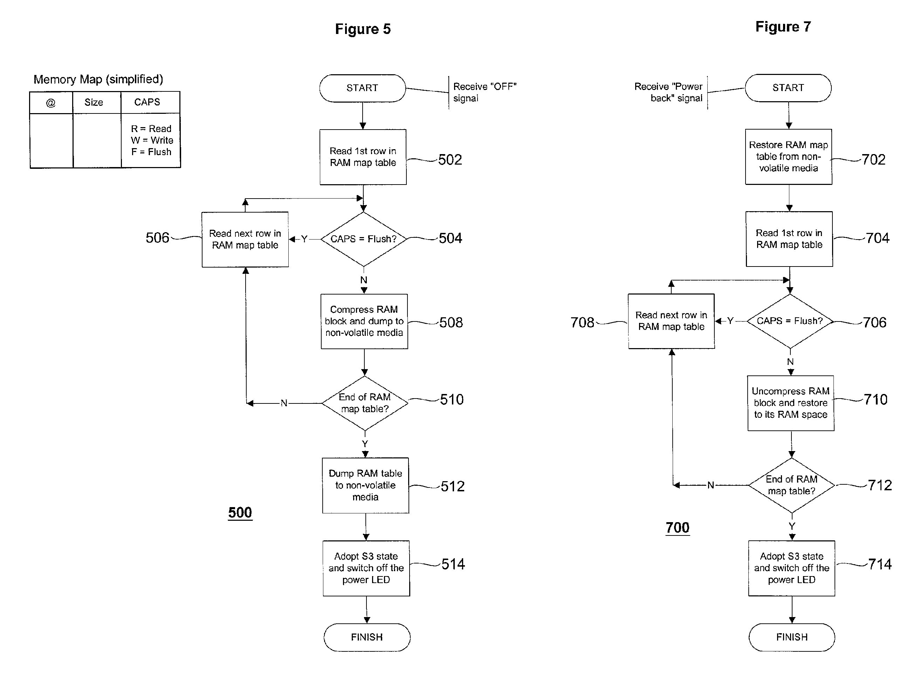

Referring to figure 5, there is shown schematically a flowchart 500 for an OFF process; that is, a process for notionally switching off the client machine 102 that uses the SS3/QS4 state. Upon detection of a power-off event by the power management event detection logic at step 502, the first row of the RAM map table 210 is read by the OSPM 114. It is determined, at step 504, whether the "CAPS" 210"' field is equal to "flush". If the "CAPS" field 210"' is equal to "flush", control passes to step 506, where the next row of the RAM map table 210 is read and the "CAPS" 210"' field is tested again at step 504. If it is determined, at step 504, that the "CAPS" 210"' field is not equal to "flush", the block of RAM defined by the associated start address 210' and the block size 210" is compressed and output for storage on the HDD 132 at step 508. A test is performed at step 510 to determine if the end of the RAM map table 210 has been reached. If the test is negative, processing continues at step 506, where the next row of the RAM map table 210 is read. If the test at step 510 is positive, the RAM map table 210 is output to the HDD 132 at step 512 and the client machine 102 is arranged to adopt the S3 state and to switch off the power LED (not shown) at step 514.

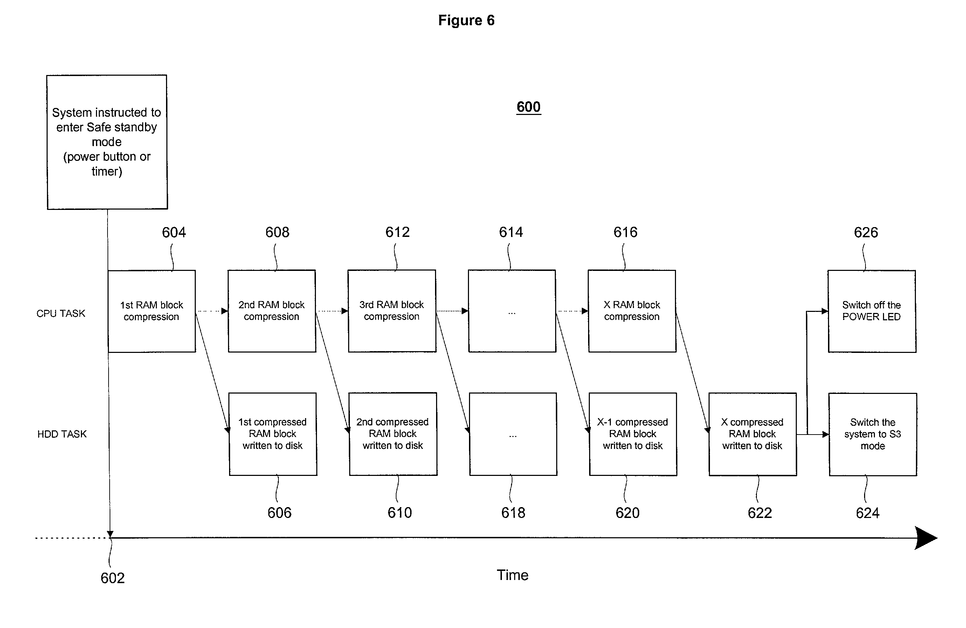

Figure 6 shows schematically the processing that is undertaken by the processor 105 and the HDD 132 in preparation for entering the SS3/QS4 state 408. At some point in time 602, the client machine 102 is instructed to enter the reduced power saving state SS3/QS4 408. The processor 105, using the codec 110', compresses a first block 604 of the RAM image 108. A block of RAM may be any desired size. However, preferred embodiments use 64k blocks of RAM. A first compressed block 606 of the RAM image 108 is output for storage on the HDD 132. While the first compressed block 606 of the RAM image 108 is being written to the HDD 132, the processor 105 fetches and compresses a second 64k block 608 of the RAM image 108. A second compressed block 610 of the RAM image 108 is written to the HDD 132. The remaining blocks 612 to 616 of the RAM image 108 are each compressed in turn and the corresponding compressed blocks 618 to 622 are output to the HDD. This parallel pipeline processing of fetching and compressing blocks of the RAM image 108 and writing the compressed blocks to the HDD 132 is continued until at least the necessary, and preferably the desirable, portions of the system memory context have been saved to the HDD 132.

Once the useful portions of the system memory context have been compressed and saved to the HDD 132, the client machine 102 adopts the SS3/QS4 state 408 at time 624. If the client machine comprises a power LED (not shown) located on the system front panel, which is often conventional, to show that the system is powered-up when the LED is on and powered-down when the LED is off, the power to the LED is switched-off at step 626. Current systems also include a power LED on the motherboard to provide an indication that power is being supplied to the client machine when the case has been removed, that is, to provide an indication that some elements of the motherboard are "live". However, the state of such a motherboard LED should not be affected for safety reasons by embodiments of the represent invention.

Figure 7 shows a flowchart 700 of a process to recover from a power failure while the system was in the SS3/QS4 state 408. A power return event is detected by the power management event detection logic 120, which causes the client machine to recover the previously stored RAM map table 210 at step 702. The first row in the RAM map table 210 is read at step 704. It is determined, at step 706, whether or not the "CAPS" field 210"' is equal to flush. If the determination is positive, processing continues at step 708, where the next row of the RAM map table 210 is read. If the determination is negative, step 710 retrieves a corresponding RAM block from the HDD 132, which is uncompressed into the appropriate RAM space of the RAM image 108 according to the values contained within the "Start Address" 210' and "Size" 210" fields of the RAM map table 210. It is determined, at step 712, whether or not the end of the RAM map table 210 has been reached. If the end of the RAM map table 210 has not been reached, processing continues at step 708, where the next row in the RAM map table 210 is read. If the end of the RAM map table 210 has been reached, the client machine 102 is placed in the S3 state and the power LED is switched off at step 714.

It will be appreciated that the processing for entering the working state, having restored the client machine to the SS3/QS4 state 408, is the same as that described with reference to figure 5. This arrangement, that is, placing the client machine in the state that it was in immediately prior to a power failure, is convenient for the user. It is also thought that it will be less disconcerting for the user, and more secure, as compared to restoring the client machine to the working system state.

A transition from the conventional S3 state to the working state, that is, state S0, takes approximately 5 seconds as does the transition to the S0 state from the SS3/QS4 state 408, which are both significantly quicker than the current 20-40 second wake-up time for an S4 to S0 transition. However, the SS3/QS4 408 state has the additional advantage of allowing a consistent or safe recovery from a power failure while the system was in the power saving state SS3/QS4.

Furthermore, even though the above embodiments have been described in terms of having a number of system states, the present invention is not limited to such system states. Embodiments can be realised in which other states such as, for example, Legacy states, mechanical-off states and soft-off states are also supported.

Although the above embodiments use an HDD as the non-volatile storage means, it will be appreciated that other forms of non-volatile storage may be used. For example, a flash-memory may be used to store the data to allow recovery from a power failure. Still further, remotely accessible non-volatile storage may be used in addition or instead of the locally accessible HDD, for storing the compressed data representing the portion of the system memory context.

It will be appreciated that the decision to save the data representing the system memory context in a compressed or an uncompressed form may be influenced by the anticipated time taken to perform the compression and subsequent decompression. Within embodiments, it may be more effective, in some circumstances, to store the data representing the portion of the system memory context in native form. Such circumstances include, for example, a situation in which the system memory context data is relatively small and the compression and decompression times would increase, rather than decrease, the time taken to store and recover the data representing the portion of the system memory context.

## Claims

1. A method for power management of a system, having a system context, comprising a first storage medium, having a current system memory context, which includes data relating to the system context, and a second non-volatile storage medium; the first and second storage media having first and second data access times respectively such that the first data access time is less than the second data access time; the system being operable in a plurality of states, each state having an associated level of system power consumption; the method comprising the steps of: outputting data representing only a portion of the current system memory context for storage on the second storage medium to allow a transition to a first state of the plurality of states from a second state of the plurality of states; and placing the system in the second state; restoring the system context from the current system memory context stored within the first storage medium in response to detection of an event while the system is in the second state or, in the event that insufficient power was available to the system to maintain the second state, retrieving the data representing the portion of the current system memory context from the second storage medium; and restoring the system memory context using the retrieved data.

2. A method as claimed in claim 1, further comprising the step of compressing the data representing the portion of the current system memory context prior to outputting that data in compressed form for storage on the second storage medium.

3. A method as claimed in either of claims 1 and 2, further comprising the step of entering, after restoring the system memory context, a selectable one of the plurality of states.

4. A method as claimed in claim 4, in which the selectable one of the plurality of states is the first or second state of the plurality of states.

5. A method as claimed in any preceding claim, in which the step of outputting the data representing the portion of the current system memory context comprises the step of saving the whole of that data in contiguous data storage locations of the second storage medium.

6. A system, capable of having a system context, comprising a first storage medium, capable of having a current system memory context, and a second, non-volatile, storage medium; the first and second storage media having first and second data access times respectively such that the first data access time is less than the second data access time; the system being operable in a plurality of states, each state having an associated level of power consumption; the system further comprising: means for outputting data representing only a portion of the current system context for storage on the second storage medium to allow a transition to a first state of the plurality of states from a second state of the plurality of states, and means for placing the system in the second state; means for restoring the system context from the current system memory context stored within the first storage medium in response to detection of an event while the system is in the second state or, in the event that insufficient power was available to maintain the second state, retrieving the data representing the portion of the current system memory context from the second storage medium; and means for restoring the system memory context using the retrieved data.

7. A system as claimed in claim 6, further comprising a codec for compressing the data representing the portion of the current system memory context prior to outputting that data for storage on the second storage medium.

8. A system as claimed in either of claims 6 and 7, further comprising means for entering, after restoring the system memory context, a selectable one of the plurality of states.

9. A system as claimed in claim 8, in which the selectable one of the plurality of states is the first state or the second state.

10. A system as claimed in any of claims 6 to 9, in which the means to output the data comprises means to save the whole of the data in contiguous data storage locations of the second non-volatile storage medium.

11. A computer program element for implementing a method as claimed in any of claims 1 to 5 or a system as claimed in any of claims 6 to 10.

12. A computer program product comprising a computer readable storage medium having stored thereon a computer program element as claimed in claim 13.
